# EUROPEAN PATENT SPECIFICATION

(11) **EP 2 845 478 B1**
(45) Date of publication and mention of the grant of the patent: **07.06.2017**
(21) Application number: 14179221.8
(22) Date of filing: 31.07.2014
(51) Int. Cl.: A01K 87/00

(54) **Fishing rod**
Angelrute
Canne à pêche

(30) Priority: 30.08.2013 JP 2013179903
(43) Date of publication of application: 11.03.2015
(73) Proprietor: Globeride, Inc., Higashikurume-shi Tokyo 203-8511 (JP)
(72) Inventor: Nishikawa, Futoshi, Higashi Kurume-shi, Tokyo 203-8511 (JP)
(74) Representative: Boult Wade Tennant

(56) References cited:
- JP-A- 2002 219 900
- JP-A- 2010 253 960
- JP-A- 2013 052 378
- US-A- 6 088 947

## Description

### TECHNICAL FIELD

The present invention relates to a fishing rod having, on the surface of a base, an ultraviolet curable resin (e.g., a UV ink) layer, which cures upon irradiation with UV rays, for the purpose of coating and decoration; and in particular, the present invention relates to a fishing rod having, on the surface of the base, a UV curable resin layer with a viscous primer layer intermediating therebetween.

### BACKGROUND

An UV ink, which cures upon irradiation with UV rays, has been used in various fields since it since it is quick-drying and endurable and is capable of printing on various materials such as glass, wood, metals, and plastics.

An UV ink layer is generally formed on an intermediate primer layer as a viscous and soft resin layer (undercoat layer) in order to retain the wettability of UV ink drops (i.e., to stabilize the diameter of struck UV drops) and enhance the adhesion of the UV ink (see Japanese Patent Application Publication No. 2013-52378 (the "'378 Publication")).

The UV ink is known to peel due to its cure shrinkage. Such peeling of the UV ink can be mitigated by, for example, providing a primer layer that can adapt to shrinkage of the UV ink, as disclosed in the '378 Publication. However, there is still a problem that, if a base onto which the UV ink and the primer layer are applied is a tubular body, the peeling of the UV ink may not be prevented by the above approach alone depending on the curvature (diameter) of the tubular body.

In particular, a tubular fishing rod is frequently distorted in use when the line is tugged by fish. For example, when a pole is distorted axially and deformed such that the cross section of the pole is depressed, a portion of the pole with a larger curvature (smaller diameter) increases its curvature due to deformation, and thus the primer layer on the portion and the UV ink applied thereon are stretched circumferentially and axially, possibly resulting in peeling of the UV ink. A primer layer that can adapt to shrinkage of the UV ink cannot alone prevent peeling of the UV ink.
Japanese Patent Application 2010-253960 discloses a tubular body used in the manufacturing process of a fishing rod according to the preamble of claim 1.

### SUMMARY

The present invention is to address the above problem. One object of the present invention is to provide a fishing rod that can prevent peeling of a UV curable resin layer on the outer surfaces of poles having various curvatures.

To the above end, the present invention is a fishing rod according to claim 1 including at least a pole with an outer diameter of 25 mm or less, the pole having a base and a UV curable resin layer stacked thereon with a viscous soft resin layer intermediating therebetween. For the pole with an outer diameter of 10 to 25 mm, the soft resin layer is applied to a thickness of 8 to less than 15 µm; and for the pole with an outer diameter of less than 10 mm, the soft resin layer is applied to a thickness of 15 to less than 20 µm.

In the above arrangement, the applied soft resin layer has a thickness in accordance with the curvature (outer diameter) of the pole (in particular, the thickness of the applied soft resin layer is larger as the outer diameter of the pole is smaller). Thus, the soft resin layer is capable of securely adapting to the shrinkage of the UV curable resin layer curing and distortion of the fishing rod being used, thereby securely preventing peeling of the UV curable resin layer.

If the fishing rod further includes a pole with an outer diameter of greater than 25 mm, the soft resin layer applied onto the pole should preferably have a thickness of 3 to less than 8 µm.

The present invention provides a fishing rod that prevents peeling of UV curable resin layers on outer surfaces of poles having various curvatures.

### BRIEF DESCRIPTION OF THE DRAWINGS

Fig. 1a is an overall side view of an entirely thin fishing rod composed only of poles having outer diameters of 25 mm or smaller; and Fig. 1b is a fragmentary side view of an entirely thick fishing rod including a pole having an outer diameter of 25 mm or smaller.
Fig. 2a is a sectional view of a pole having an outer diameter of less than 10 mm, and a soft resin layer and a UV curable resin layer stacked on the outer surface of the pole; Fig. 2b is a sectional view of a pole having an outer diameter of 10 to 25 mm, and a soft resin layer and a UV curable resin layer stacked on the outer surface of the pole; and Fig. 2c is a sectional view of a pole having an outer diameter of greater than 25 mm, and a soft resin layer and a UV curable resin layer stacked on the outer surface of the pole.
Fig. 3 is a data table showing correlation between outer diameters (curvatures) of poles and thicknesses of soft resin layers in which no peeling of the UV curable resin layer occurs in the three types of poles shown in Figs. 2a to 2c.

### DESCRIPTION OF EXAMPLE EMBODIMENTS

Embodiments of a fishing rod according to the invention are hereinafter described with reference to the drawings.

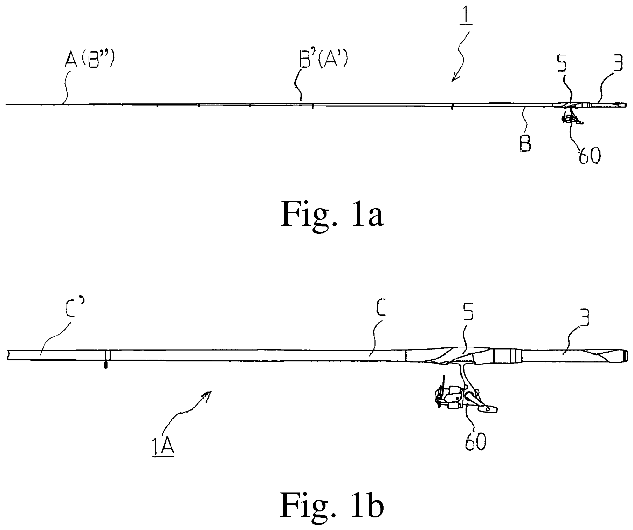

Fig. 1a is an overall side view of an entirely thin fishing rod 1 composed only of poles having outer diameters of 25 mm or smaller; Fig. 1b is a fragmentary side view of an entirely thick fishing rod 1A including a pole having an outer diameter of 25 mm or smaller.

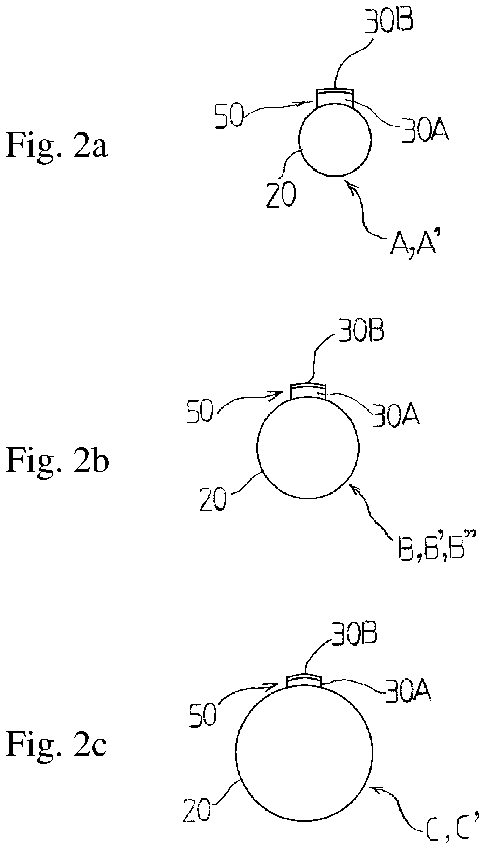

The fishing rod 1 shown in Fig. 1a may include a plurality of tubular poles, e.g., a base pole B having an outer diameter of 10 to 25 mm and having a grip 3 and a reel seat 5 for detachably receiving a fishing reel 30, one or more intermediate poles B' thinner than the base pole and having outer diameters of 10 to 25 mm and/or one or more intermediate poles A' having outer diameters of less than 10 mm, and a tip top pole B" thinner than the intermediate poles and having an outer diameter of 10 to 25 mm and equipped with a fishline fastener 7a or a tip top pole A having an outer diameter of less than 10 mm. In this case, the poles (the base pole, intermediate poles, and tip top pole) may be arranged to be telescopic or ordinarily jointed; and the pole bodies (the bases 20; see Fig. 2) constituting the poles may be formed by, e.g., winding a fiber-reinforced prepreg made of a reinforced fiber impregnated with a synthetic resin (or may be formed of a metal such as steel).

The fishing rod 1A shown in Fig. 1b may also include a plurality of tubular poles arranged to be telescopic or ordinarily jointed Only part (one or more) of the poles have outer diameters of 25 mm or smaller. For example, only a tip top pole and/or one or more intermediate poles (not shown) may have outer diameters of 25 mm or smaller and may be formed of poles A, A' (having outer diameters of less than 10 mm) or poles B', B" (having outer diameters of 10 to 25 mm); and other poles including a base pole C and/or one or more intermediate poles C' may have outer diameters of greater than 25 mm.

As shown in Fig. 2, at least part of the outer surfaces of the poles constituting the fishing rods 1, 1A is provided with, e.g., a laminate structure 30 as a decorative layer 50 including a viscous soft resin layer (also referred to as an undercoat layer or a primer layer, and hereinafter referred to as a soft resin layer) 30A provided directly on the surface of the base 20 of the pole or indirectly with another layer as an intermediate therebetween, and a UV curable resin (e.g., a UV ink) layer 30B that is provided on the soft resin layer 30A and cures upon irradiation with ultraviolet rays. The laminate structure 30 may be formed by various methods (e.g., ink-jet printing).

The resin forming the soft resin layer 30A should have an elasticity of 20% or higher so as to securely adapt to shrinkage of the UV curable resin layer curing and distortion of the fishing rod being used Examples of such resin may be polyester, urethane, acrylic, etc.

Meanwhile, the UV resin forming the UV curable resin layer 30B may be viscous and cure through a polymerization reaction upon irradiation with ultraviolet rays. More specifically, the UV resin may be composed mainly of a photopolymeric oligomer or monomer (epoxy acrylate, urethane acrylate, polyester acrylate, etc.) and include a catalyst as a photopolymeric initiator, as well as a pigment and an adjuvant such as an antifoam agent. In the UV resin, the photopolymeric initiator may produce radicals upon irradiation with ultraviolet rays, and the radicals may initiate polymerization of the oligomer. Such polymerization reaction causes the UV resin to cure and settle on the printing medium. Among various photopolymeric initiators, generally used are benzophenone-based, benzoin-based, acetophenone-based, thioxanthone-based, acyl phosphine oxide-based, etc.

The decorative layer 50 may be coated with a transparent layer or a translucent layer. These layers may be formed of either paints including a solvent (solvent-based inks) or UV inks including a UV curable resin.

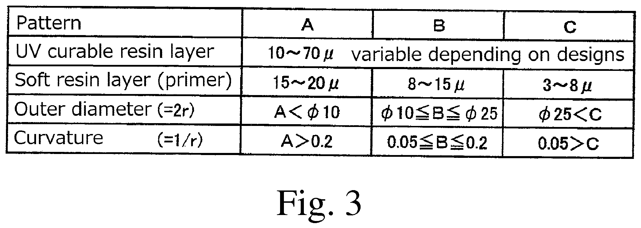

In the fishing rods 1, 1A of the present invention, the thickness of a soft resin layer may depend on the outer diameter (curvature) of the pole constituting the fishing rods. More specifically, Fig. 2a is a sectional view of above-mentioned poles A, A' having an outer diameter of less than 10 mm, and a soft resin layer 30A and a UV curable resin layer 30B stacked on the outer surface of the poles A, A'; Fig. 2b is a sectional view of the above-mentioned poles B, B', B" having an outer diameter of 10 to 25 mm, and a soft resin layer 30A and a UV curable resin layer 30B stacked on the outer surface of the poles B, B', B"; and Fig. 2c is a sectional view of the above-mentioned poles C, C' having an outer diameter of greater than 25 mm, and a soft resin layer 30A and a UV curable resin layer 30B stacked on the outer surface of the poles C, C'. As may be understood from the table shown in Fig. 3, the poles A, A' having an outer diameter of less than 10 mm (see Fig. 2a) may be coated with the soft resin layer 30A to a thickness of 15 to less than 20 µm, the poles B, B', B" having an outer diameter of 10 to 25 mm (see Fig. 2b) may be coated with the soft resin layer 30A to a thickness of 8 to less than 15 µm, and the poles C, C' having an outer diameter of greater than 25 mm (see Fig. 2c) may be coated with the soft resin layer 30A to a thickness of 3 to less than 8 µm. That is, the thickness of the soft resin layer 30A applied onto the pole is larger as the outer diameter of the pole is smaller.

With the three types of poles shown in Figs. 2a to 2c, the Inventor has experimentally found a correlation between pole outer diameters (curvatures) A(A, A'), B(B, B', B"), and C(C, C') and the thickness of the soft resin layer 30A as shown in Fig. 3, and confirmed that, as long as the correlation is fulfilled, the soft resin layer 30A may adapt to shrinkage of the UV curable resin layer 30B curing and distortion of the fishing rod being used so as to prevent peeling of the UV curable resin layer 30B. Actually, in shrinkage of the UV curable resin layer 30B curing, as well as in use of the fishing rod wherein a pole is distorted axially and deformed such that the cross section of the pole is depressed, a portion of the pole with a larger curvature (smaller diameter) increases its curvature due to deformation, and thus the soft resin layer 30A on the portion and the UV curable resin layer 30B applied thereon may be significantly stretched circumferentially and axially. Therefore, if the soft resin layer 30A on the portion of the pole with a larger curvature (smaller outer diameter) has a thickness large enough (as in the embodiment shown in Fig. 3) to adapt to a significant deformation (increase in curvature), peeling of the UV curable resin layer 30B can be prevented Conversely, portions of the pole with a smaller curvature (larger outer diameter) may not have a significantly large curvature even in use of the fishing rod wherein the pole is distorted axially and deformed such that the cross section of the pole is depressed Therefore, such portions can be coated with the soft resin layer 30A to a smaller thickness (as in the embodiment shown in Fig. 3).

If the thickness of the soft resin layer 30A is less than 3 µm, the adhesion between the soft resin layer 30A and the UV curable resin layer 30B is too small to prevent peeling of the UV curable resin layer 30B, even on a pole having an outer diameter of greater than 25 mm (because the soft resin layer 30A cannot sufficiently adapt to the deformation of the pole). In contrast, if the thickness of the soft resin layer 30A is greater than 20 µm, the weight of the entire laminate structure is excessively large, resulting in unfavorable increase in weight of the entire fishing rod Meanwhile, the thickness of the UV curable resin layer 30B may be, e.g., 10 to 70 µm depending on the design of the decorative layer 50.

In the fishing rods 1, 1A described above, the applied soft resin layer 30A has a thickness in accordance with the curvature (outer diameter) of the pole (in particular, the thickness of the applied soft resin layer 30A is larger as the outer diameter of the pole is smaller). Thus, the soft resin layer 30A is capable of securely adapting to the shrinkage of the UV curable resin layer 30B curing and distortion of the fishing rod being used, thereby securely preventing peeling of the UV curable resin layer 30B.

Embodiments of the present invention are not limited to the above descriptions and are susceptible to various modifications within the scope of the present invention as defined by the appended claims. For example, the thickness of the soft resin layer may be in linear inverse proportion to the outer diameter of the pole.

## Claims

1. A fishing rod comprising a first pole having an outer diameter of 25 mm or less, the first pole having a base and a ultraviolet curable resin layer stacked thereon with a viscous soft resin layer intermediating therebetween,
**characterized in that** a thickness of the soft resin layer applied onto the first pole is 8 to less than 15 µm for the outer diameter of the first pole being 10 to 25 mm, and the thickness of the soft resin layer applied onto the first pole is 15 to less than 20 µm for the outer diameter of the first pole being less than 10 mm.

2. The fishing rod of claim 1 further comprising a second pole having an outer diameter of greater than 25 mm, wherein the thickness of the soft resin layer applied onto the second pole is 3 to less than 8 µm.

3. The fishing rod of claim 1 wherein the thickness of the soft resin layer applied onto the first pole is larger as the outer diameter of the first pole is smaller.

## Patentansprüche

1. Angelrute umfassend eine erste Stange aufweisend einen äußeren Durchmesser von 25 mm oder weniger, wobei die erste Stange eine Basis und eine Ultraviolett härtenden Harzschicht aufweist, die darauf aufgebracht ist, mit einer viskosen weichen Harzschicht dazwischen gefügt,
**dadurch gekennzeichnet, dass** eine Dicke der weichen Harzschicht, die auf die erste Stange angewandt ist, 8 bis weniger als 15 µm bei äußeren Durchmesser der ersten Stange von 10 bis 25 mm ist und dass die Dicke der weichen Harzschicht, die auf die erste Stange angewandt wird, 15 bis weniger als 20 µm bei äußeren Durchmesser der ersten Stange von weniger als 10 mm ist.

2. Angelrute nach Anspruch 1 ferner umfassend eine zweite Stange aufweisend einen äußeren Durchmesser größer als 25 mm, wobei die Dicke der weichen Harzschicht, die auf die zweite Stange angewandt ist, 3 bis weniger als 8 µm ist.

3. Angelrute nach Anspruch 1, wobei die Dicke der weichen Harzschicht, die auf die erste Stange angewandt ist, größer ist, wenn der äußere Durchmesser der ersten Stange kleiner ist.

## Revendications

1. Canne à pêche comprenant une première canne ayant un diamètre externe inférieur ou égal à 25 mm, la première canne ayant une base et une couche de résine durcissable aux ultraviolets empilée sur celle-ci avec une couche de résine souple visqueuse disposée entre elles,
**caractérisée en ce que** l'épaisseur de la couche de résine souple appliquée sur la première canne varie de 8 à moins de 15 µm pour le diamètre externe de la première canne qui est compris entre 10 et 25 mm, et l'épaisseur de la couche de résine souple appliquée sur la première canne varie de 15 à moins de 20 µm pour le diamètre externe de la première canne qui est inférieur à 10 mm.

2. Canne à pêche de la revendication 1, comprenant en outre une deuxième canne ayant un diamètre externe supérieur à 25 mm, où l'épaisseur de la couche de résine souple appliquée sur la deuxième canne varie de 3 à moins de 8 µm.

3. Canne à pêche de la revendication 1, dans laquelle l'épaisseur de la couche de résine souple appliquée sur la première canne est plus grande à mesure que le diamètre externe de la première canne est plus petit.
